# EUROPÄISCHE PATENTSCHRIFT

(11) **EP 2 630 319 B1**
(45) Veröffentlichungstag und Bekanntmachung des Hinweises auf die Patenterteilung: **27.12.2017**
(21) Anmeldenummer: 11764724.8
(22) Anmeldetag: 30.09.2011
(51) Int. Cl.: E05B 79/06, E05B 85/06, E05B 63/04

(54) **VORRICHTUNG ZUR BEFESTIGUNG EINES WESENTLICHEN BAUELEMENTES EINER HANDHABE EINES KRAFTFAHRZEUGES**
DEVICE FOR SECURING AN ESSENTIAL COMPONENT OF A MOTOR VEHICLE HANDLE
DISPOSITIF DE FIXATION D'UN ÉLÉMENT CONSTITUTIF ESSENTIEL D'UNE POIGNÉE D'UN VÉHICULE À MOTEUR

(30) Priorität: 19.01.2011 DE 102011000224; 18.10.2010 DE 102010038255
(43) Veröffentlichungstag der Anmeldung: 28.08.2013
(73) Patentinhaber: Huf Hülsbeck & Fürst GmbH & Co. KG, 42551 Velbert (DE)
(72) Erfinder: GEBEL, Sebastian, 50733 Köln (DE); KAUSHAL, Anuj, 45307 Essen (DE); KILIAN, Marion, 42551 Velbert (DE)
(74) Vertreter: Vogel, Andreas
(86) Internationale Anmeldenummer: PCT/EP2011/067105
(87) Internationale Veröffentlichungsnummer: WO 2012/052274

(56) Entgegenhaltungen:
- EP-A1- 1 026 351
- EP-A1- 1 416 108
- EP-A1- 1 632 627
- EP-A2- 1 176 271
- EP-A2- 1 473 423
- DE-B3-102004 007 083

## Beschreibung

Die Erfindung betrifft eine Vorrichtung zur Befestigung eines wesentlichen Bauelementes, insbesondere eines Schließzylinders, einer Schließzylinderattrappe etc., einer Handhabe eines Kraftfahrzeuges, mit einem Träger, der innenseitig an einem beweglichen Teil, insbesondere an einer Klappe, Hecklappe oder Tür befestigbar ist, wobei eine Blockiereinheit am Träger angeordnet ist, die bewegbare Getriebeelemente umfasst, wodurch die Blockiereinheit zwischen einer Blockierlage und einer Freigabelage bringbar ist, in der Freigabelage das Bauelement lose sich am Träger befindet und in der Blockierlage das Bauelement zuverlässig am Träger gehalten ist, und wobei die Anordnung der Getriebeelemente ein einstufiges Getriebe mit einem Antriebselement und einem Abtriebselement ist. In der DE 10 2007 027 848 ist eine Handhabe eines Kraftfahrzeuges beschrieben, die einen Träger aufweist, der an der Innenseite einer Tür befestigbar ist. Der Träger weist hierbei unterschiedliche Funktionen auf, beispielsweise kann das für den Benutzer vorgesehene Griffelement, welches türaußenseitig positioniert ist, an einer geeigneten Stelle am Träger bewegbar gelagert sein. Ferner bietet der Träger einen geeigneten Befestigungsbereich für den Schließzylinder, der bei der Montage der Handhabe vom Monteur entsprechend am Träger zu fixieren ist. Insbesondere die Fixierung des Schließzylinders gestaltet sich bei unterschiedlichen Anwendungssituationen als schwierig. Da häufig standardisierte Handhaben in unterschiedlichen Kraftfahrzeugmodellen zum Einsatz kommen, ist das Interesse groß, wesentliche Bauelemente wie einen Schließzylinder mit einem geringen Montageaufwand zuverlässig an der Handhabe zu befestigen. Die Schrift EP 1 416 108 A1 offenbart ebenfalls eine gattungsgemäße Vorrichtung zur Verriegelung.

Es ist die Aufgabe der vorliegenden Erfindung, eine Vorrichtung zur Befestigung eines wesentlichen Bauelementes zu schaffen, bei der der Montageaufwand zur eigentlichen Fixierung des Bauelementes gering halten werden kann.

Zur Lösung dieser Aufgabe wird eine Vorrichtung mit den Merkmalen des Anspruchs 1 vorgeschlagen. In den abhängigen Ansprüchen sind bevorzugte Weiterbildungen ausgeführt.

Dazu ist erfindungsgemäß vorgesehen, dass eine Blockiereinheit am Träger angeordnet ist, die bewegbare Getriebeelemente umfasst, wodurch die Blockiereinheit zwischen einer Blockierlage und einer Freigabelage bringbar ist, in der Freigabelage das Bauelement lose, insbesondere ungesichert sich am Träger befindet und in der Blockierlage das Bauelement zuverlässig am Träger gehalten ist.

Durch den Einsatz bewegbarer Getriebeelemente kann während der Montage das Bauelement auf einfache Weise am Träger fixiert werden. Hierbei bietet die Blockiereinheit eine Blockierlage und eine Freigabelage, wobei in der Freigabelage das Bauelement am Träger zunächst eingesetzt werden kann sowie in die gewünschte Position gebracht werden kann, bevor die eigentliche Fixierung am Träger erfolgt. Im zweiten Schritt wird die Blockiereinheit aus ihrer Freigabelage in die Blockierlage gebracht, in der das Bauelement seine endgültige Befestigungslage einnimmt. Die Blockiereinheit bietet dem Monteur einen standardisierten Befestigungsvorgang, bei dem die Getriebeelemente entsprechend zu bewegen sind, um die Blockiereinheit in ihre Blockierlage zu bringen.

Erfindungsgemäß ist vorgesehen, dass die Anordnung der Getriebeelemente ein einstufiges Getriebe mit einem Antriebselement und einem Abtriebselement ist. Die Verwendung des einstufigen Getriebes stellt eine einfache Kinematik dar, die eine zuverlässige Bewegung der einzelnen Getriebeelemente begünstigt, damit die Blockiereinheit zwischen einer Blockierlage und einer Freigabelage gebracht werden kann. Das einstufige Getriebe stellt ferner eine kompakte Gesamtanordnung dar, um die Blockiereinheit entsprechend in ihre Lage zu versetzen.

Gemäß der erfindungsgemäßen Ausführungsform des einstufigen Getriebes ist das Antriebselement ein Antriebsrad und das Abtriebselement zumindest bereichsweise zahnstangenartig ausgeführt.

In einer bevorzugten Ausführungsform der Erfindung kann zumindest ein Getriebeelement von Außen zugänglich sein, um eine Befestigung des Bauelementes zu bewirken. Das bedeutet, dass bei der Montage ein Werkzeug von außen zur Blockiereinheit eingeführt werden kann, um eine entsprechende Bewegung auf zumindest ein Getriebeelement auszuüben, wodurch eine entsprechende Fixierung des Bauelementes am Träger bewirkt werden kann.

Vorteilhafterweise kann von der Innenseite des beweglichen Teils der Zugang von zumindest einem Getriebeelement vorgesehen sein. Die erfindungsgemäße Vorrichtung eignet sich besonders dafür, dass von der Innenseite des beweglichen Teils, insbesondere der Fahrzeugtür über ein Werkzeug eines der Getriebeelemente bei der Montage bewegt werden kann, um eine Überführung der Blockiereinheit von der Freigabelage in die Blockierlage zu schaffen. Nachdem eine entsprechende Fixierung des Bauelementes am Träger erfolgt ist, kann die Innenverkleidung der Kraftfahrzeugtür angebracht werden, so dass die Innenverkleidung den innenseitigen Zugang zum Getriebeelement der Blockiereinheit zuverlässig verdeckt.

In einer bevorzugten Ausführungsform der Erfindung kann ein außenliegendes Griffelement am Träger angeordnet sein. Das Griffelement kann als Schwenkgriff, Ziehgriff, Klappgriff oder Revolvergriff ausgeführt sein. Vorteilhafterweise ist das außenliegende Griffelement am Träger beweglich gelagert, wobei das Griffelement sowie der Träger eine längliche Erstreckung aufweisen. In einer möglichen Ausführungsform der Erfindung kann die längliche Erstreckung horizontal am beweglichen Teil, insbesondere an der Tür verlaufen. Horizontal bedeutet hierbei, dass das Griffelement sowie der Träger entlang der Längserstreckung des Kraftfahrzeuges ausgerichtet ist.

In einer weiteren Ausführungsform der Erfindung kann die Erstreckung vertikal am beweglichen Teil insbesondere an der Kraftfahrzeugtür verlaufen, das bedeutet, dass das Griffelement sowie der Träger senkrecht zur Bodenfläche, auf der das Kraftfahrzeug steht, ausgerichtet ist.

In einer weiteren Ausführungsform der erfindungsgemäßen Vorrichtung befindet sich die Blockiereinheit innerhalb einer Handhabe, die an einer Schiebetür eines Kraftfahrzeuges befestigt ist. Es hat sich vorteilhafterweise gezeigt, dass der innenseitige Zugang zu der Blockiereinheit bei Schiebetüren, insbesondere bei vertikal verlaufenden Griffelement sowie Träger besonders vorteilhaft bei der Montage ist.

Des Weiteren kann vorgesehen sein, dass die Blockiereinheit eines Sicherung aufweist, die in einem aktivierten Zustand die Beibehaltung der Blockierlage sichert. Die Sicherung kann auch einen deaktivierten Zustand einnehmen, bei dem zwar die Blockiereinheit in ihrer Blockierlage sich befinden kann, jedoch die Blockiereinheit in der Blockierlage nicht zuverlässig gesichert ist.

In einer besonderen Ausgestaltung der erfindungsgemäßen Vorrichtung kann die Sicherung von außen zugänglich sein, damit der Werker von Außen die Sicherung in den aktivierten Zustand bringen kann.

Vorteilhafterweise besteht der Zugang zur Sicherung von der Innenseite des beweglichen Teils, insbesondere der Kraftfahrzeugtür, das bedeutet, dass sowohl die Blockiereinheit als auch die Sicherung von der gleichen Innenseite getätigt werden können. Hierdurch lässt sich der Montageaufwand erheblich verringern.

Damit eine zuverlässige Kraftübertragung vom Antriebselement auf das Abtriebselement bewirkt wird, kann es vorteilhaft sein, dass das Antriebselement und das Abtriebselement miteinander verzahnt sind. In einer speziellen Ausführungsform kann es von Vorteil sein, dass die Verzahnung selbsthemmend ausgeführt ist, das bedeutet, dass die Blockiereinheit aus ihrer Blockierlage über eine Bewegung des Abtriebselementes in die Freigabelage nicht möglich ist.

In einer möglichen Ausführungsform der Blockiereinheit ist das Antriebsrad um eine Drehachse am Träger gelagert, wobei das Abtriebselement linear beweglich am Träger gelagert ist. Über eine entsprechende Bewegung des Antriebsrades um seine Drehachse erfolgt eine Linearbewegung des Abtriebselementes, so dass in einer entsprechenden Position des Abtriebselementes die Blockiereinheit ihre Blockierlage erreicht und somit das wesentliche Bauelement innerhalb des Trägers zuverlässig fixiert.

In einer weiteren Ausgestaltung kann die Blockiereinheit einen bewegbaren Befestigungsbereicht aufweisen, der in der Freigabelage losgelöst vom Bauelement ist und in der Blockierlage zuverlässig in das Bauelement eingreift. Der bewegbare Befestigungsbereich kann einstückig und/oder materialeinheitlich mit dem zahnstangenartigen Bereich des Abtriebselementes sein. Vorteilhafterweise bilden das Abtriebselement mit dem zahnstangenartigen Bereich und/oder mit dem Befestigungsbereich ein monolithisches Bauteil. Das bedeutet, dass durch die Bewegung des zahnstangenartigen Bereiches des Abtriebselementes gleichzeitig der Befestigungsbereich in Richtung des wesentlichen Bauelementes, insbesondere des Schließzylinders bewegt wird, wenn die Blockiereinheit aus der Freigabelage in Richtung Blockierlage bewegt wird. Ist die Blockierlage erreicht, greift der Befestigungsbereich des Abtriebselementes zuverlässig in das wesentliche Bauelement ein, so dass hierdurch eine zuverlässige Fixierung am Träger gewährleistet ist.

Vorteilhafterweise kann der Befestigungsbereich C-förmig ausgeführt sein, wobei in der Blockierlage der Befestigungsbereich zumindest bereichsweise das Bauelement umfasst. Der Schließzylinder weist in der Regel eine zylinderartige Erstreckung auf, die über einen C-förmigen Befestigungsbereich sehr gut am Träger befestigt werden kann. Das zu fixierende Bauelement weist vorteilhafterweise eine entsprechende Kontur an der Mantelfläche auf, in die der Befestigungsbereich, insbesondere der C-förmige Befestigungsbereich eingreifen kann, wodurch eine zuverlässige Fixierung des zu befestigenden Bauelementes erzielbar ist.

Damit die Blockiereinheit leichtgängig zwischen der Blockierlage und der Freigabelage bewegt werden kann, kann der Träger mit definierten Führungsflächen ausgeführt sein, die eine Bewegung des Befestigungsbereiches und/oder des Abtriebselementes ermöglichen.

Die Führungsflächen am Träger begünstigen hierbei eine entsprechende Bewegung der zum Einsatz kommenden Getriebeelemente. Vorteilhafterweise kann vorgesehen sein, dass der Träger mit einer Aufnahme für das Antriebselement ausgeführt ist, wobei das Antriebselement über eine Rastverbindung an der Aufnahme gehalten ist und/oder das Antriebselement federnd in der Aufnahme gelagert ist. Die Aufnahme am Träger ist derart gestaltet, dass auf einfache Weise das Antriebselement am Träger montiert werden kann. Die Rastverbindung bewirkt, dass auch während der Bewegung der Getriebeelemente das Antriebselement zuverlässig in seiner Position innerhalb der Aufnahme verbleibt. Gleichzeitig kann das Antriebselement um seine Drehachse rotieren, um das Abtriebselement entsprechend zu bewegen. Die federnde Lagerung des Antriebselementes, die eine Leichtgängigkeit bei der Bewegung der Getriebeelemente begünstigt, kann beispielsweise durch federnde Stege erzielt werden, die die Aufnahme aufweist. Beispielsweise können sich die Stege von außen der Aufnahme in Richtung der Drehachse des Antriebselementes erstrecken. Vorteilhafterweise sind mehrere federnde Stege in der Aufnahme vorgesehen. Beim Einsetzen des Antriebselementes in die Aufnahme kann es vorgesehen sein, dass die federnden Stege elastisch verformt werden und anschließend ihre Ursprungslage wieder einnehmen, wenn das Antriebselement entsprechend in der Aufnahme eingesetzt ist. Der Träger bildet vorzugsweise mit der Aufnahme ein monolithisches Bauteil, welches z. B. ein Spritzgussteil aus Kunststoff ist.

In einer die Erfindung verbessernden Maßnahme kann die Aufnahme eine erste Öffnung aufweisen, durch die das Antriebselement in die Aufnahme einbringbar ist, und/oder eine zweite Öffnung aufweisen, durch die das Abtriebselement in Richtung des Abtriebselementes ragt. Hierbei ist es weiterhin denkbar, dass die federnden Stege die erste Öffnung zumindest bereichsweise begrenzen. Vorteilhafterweise sind vier federnde Stege an der Aufnahme vorgesehen. Das Antriebselement weist vorzugsweise eine Nabe auf, die um die Drehachse des Antriebselementes bewegbar ist. Der Träger kann vorteilhafterweise über eine entsprechende Lagerstelle innerhalb der Aufnahme verfügen, an der die Nabe bewegbar aufgesetzt ist. Zusätzlich kontaktieren die Stege mit ihren freien Enden die Nabe, so dass das Antriebselement zuverlässig in der Aufnahme gehalten ist, ohne dass die Gefahr besteht, dass das Antriebselement aus der ersten Öffnung ungewollt herausfallen kann.

Die zweite Öffnung befindet sich vorteilhafterweise an der der ersten Öffnung gegenüberliegenden Seite der Aufnahme, durch die es zumindest bereichsweise ragt und in das Abtriebselement angreift. Die Gesamtkonstruktion der Aufnahme bildet eine Art Käfig für das Antriebselement, das zuverlässig innerhalb der Aufnahme gehalten ist und gleichzeitig Schnittstellen nach außen bildet, um beispielsweise durch ein Werkzeug angetrieben zu werden sowie das Abtriebselement entsprechend zu bewegen.

Die Aufnahme sowie die Blockiereinheit sind platzsparend ausgeführt, indem zum einen die Getriebeelemente flach ausgeführt sind und zum anderen die Geometrie der Aufnahme der Gestaltung des Antriebselementes angepasst ist, insbesondere die erste und/oder die zweite Öffnung der Aufnahme schlitzförmig ausgeführt sind. In einer möglichen Ausgestaltung der Erfindung ist das Antriebselement scheibenartig ausgebildet.

Denkbar ist, dass am zahnstangenartigen Bereich des Abtriebselementes, der in Wirkverbindung mit dem Antriebselement ist, eine Sicherung vorgesehen ist. Alternativ oder zusätzlich kann vorgesehen sein, dass in der Blockierlage durch den zahnstangenartigen Bereich des Abtriebselementes ein Sicherungselement der Sicherung sich erstreckt und gleichzeitig in die Führungsfläche eindringt. Das Sicherungselement ist von außen zugänglich, so dass über ein Werkzeug das Sicherungselement zuverlässig an der Führungsfläche fixiert werden kann, wobei gleichzeitig das Abtriebselement durch das Sicherungselement in der Blockierlage gesichert werden kann. Das Sicherungselement kann eine Schraube sein.

Damit eine zufriedenstellende Bewegung des Abtriebselementes entlang der Führungsfläche des Trägers möglich ist, kann die Führungsfläche ein Führungselement aufweisen, das in ein Gegenführungselement des Abtriebselementes eingreift. Beispielsweise kann das Führungselement des Trägers vorsprungartig aus der Führungsfläche herausragen und in eine entsprechende Öffnung, die durch das Gegenführungselement gebildet ist, eingreifen. Somit wird sichergestellt, dass das Abtriebselement zuverlässig sich innerhalb der Führungsfläche hin und her bewegen kann, ohne den definierten Verfahrweg innerhalb der Führungsfläche des Trägers zu verlassen. Selbstverständlich ist es denkbar, das Abtriebselement mit einem vorsprungartigen Gegenführungselement auszuführen, welches in eine entsprechende Ausnehmung der Führungsfläche eingreift.

Zweckmäßigerweise ist zur Vereinfachung der Montage für den Werker ein Montagefenster vorgesehen, welches einen Eingriff mit einem Werkzeug am Antriebselement sowie an der Sicherung erlaubt. Vorteilhafterweise ist das Antriebselement sowie die Sicherung und/oder das Montagefenster mit einer entsprechenden Signalfarbe ausgestattet, um etwaige Montagefehler weiter zu reduzieren.

Zweckmäßigerweise kann die Sicherung und/oder das Antriebselement eine Kraftaufnahmekontur aufweisen, damit ein Werkzeug auf die Sicherung und/oder auf das Antriebselement wirken kann.

In einer möglichen Ausführungsform der Erfindung kann die Sicherung als ein Federelement ausgeführt sein, das ein monolithisches Bauteil mit dem Träger ist und/oder das materialeinheitlich mit dem Träger verbunden ist, wobei das Federelement mit einem ersten Rastelement ausgebildet ist, das die Blockiereinheit in der Blockierlage zuverlässig hält, wobei insbesondere das erste Rastelement den zahnstangenartigen Bereich des Abtriebselement in der Blockierlage der Blockiereinheit hält. Während die Blockiereinheit in Richtung Blockierlage bewegt wird, liegt das Rastelement des Federelementes zwar an der sich bewegenden Blockiereinheit an, wobei das Federelement unter Spannung steht und elastisch verformt ist und in Richtung Blockiereinheit eine gewisse Kraft ausübt. Erreicht die Blockiereinheit die Blockierlage, schnappt das Federelement in Richtung Blockiereinheit, wobei gleichzeitig das erste Rastelement, welches am Federelement angeordnet ist, verhindert, dass ungewollt die Blockiereinheit zurück aus der Blockierlage in die Freigabelage gelangt.

Vorzugsweise kann der Träger ein zweites und/oder ein drittes Rastelement aufweisen, wobei das zweite und/oder das dritte Rastelement im Bereich der Führungsflächen die Blockiereinheit in der Blockierlage und/oder in der Freigabelage zuverlässig halten. Das zweite und/oder das dritte Rastelement können ebenfalls federnd ausgeführt sein. Ferner ist es denkbar, dass das zweite und/oder das dritte Rastelement nur in der Blockierlage oder nur in der Freigabelage oder sowohl in der Blockierlage als auch in der Freigabelage an der Blockiereinheit eingerastet ist und diese somit entsprechend fixiert. Das zweite und/oder das dritte Rastelement bilden mit dem Träger vorzugsweise ein monolithisches Bauteil.

In einer weiteren die Erfindung verbessernden Maßnahme kann vorgesehen sein, dass die Blockiereinheit eine Aufnahme aufweist, in die das erste Rastelement in der Freigabelage der Blockiereinheit eingreift, wobei insbesondere das Federelement sich im ungespannten Zustand befindet. In einem vormontierten Zustand der erfindungsgemäßen Vorrichtung befindet sich das erste Rastelement des Federelementes in der Aufnahme der Blockiereinheit, wobei gleichzeitig das Federelement sich in einem ungespannten und/oder nicht elastisch verformten Zustand befindet. Gleichzeitig wird die Blockiereinheit in der Freigabelage durch das erste Rastelement des Federelementes derart fixiert, dass eine Verschiebung der Blockiereinheit in die Blockierlage ausgeschlossen ist. Vorteilhaft hierbei ist, dass bis zum eigentlichen Montagevorgang das Federelement sich im ungespannten Zustand befindet und somit keine Materialbelastungen erfährt.

In einer möglichen Ausführungsform der Erfindung kann das erste Rastelement die Blockiereinheit gegen eine Verschiebung in Richtung Freigabelage sichern und/oder das zweite und/oder das dritte Rastelement die Blockiereinheit gegen ein ungewolltes Herausfallen ungefähr senkrecht zur Bewegungsrichtung zwischen der Blockierlage und der Freigabelage sichern.

Ebenfalls kann vorgesehen sein, dass das Montagefenster senkrecht und oder diagonal zur Bewegungsrichtung der Blockiereinheit ausgerichtet ist. Hierbei ist das Montagefenster derart ausgeführt, dass der Werker sowohl am Antriebselement als auch an der Sicherung mit einem geeigneten Werkzeug angreifen kann. Zweckmäßigerweise ist das Montagefenster länglich und/oder schlitzartig ausgeführt und dient als eine Öffnung für beide Funktionsteile, d. h. für das Antriebselement und für die federnde Sicherung. Falls nämlich der Werker die Blockiereinheit, die sich bereits in ihrer Blockierlage befindet, zurück in die Freigabelage bewegen möchte, kann durch ein entsprechendes Werkzeug die federnde Sicherung über das Montagefenster gut erreicht werden und der aktivierte Zustand der Sicherung beendet werden. Durch ein gleichzeitiges Drehen über ein weiteres Werkzeug am Antriebselement kann der Werker eine Bewegung der Blockiereinheit aus der Blockierlage in die Freigabelage zurück auslösen.

In einer weiteren Variante der Erfindung kann der zahnstangenartige Bereich stabartig oder C-artig ausgeführt sein, wobei der C-artige Bereich zwei voneinander beabstandete Verzahnungen aufweist und zwischen den Verzahnungen am Träger das Antriebselement drehbar gelagert ist. Bei dieser Ausführungsform ist weniger Montagevolumen notwendig, welches ein wesentlicher Vorteil darstellt. Die Aufnahme für das Antriebselement befindet sich zwischen den beiden voneinander beabstandeten Verzahnungen der Blockiereinheit, wobei vorteilhafterweise das Antriebselement lediglich mit einer der beiden Verzahnungen in Wirkverbindung steht. Die erfindungsgemäße Vorrichtung kann sowohl für linke als auch für rechte Kraftfahrzeugtüren eingesetzt werden, wobei der Werker für die Überführung der Blockiereinheit aus der Freigabelage in die Blockierlage das Antriebselement lediglich in eine Richtung (im Uhrzeigersinn oder gegen den Uhrzeigersinn) für beide Fahrzeugtüren drehen muss. Für die gegenüberliegende Fahrzeugtür ist es nur notwendig, die Drehachse des Antriebselementes zur gegenüberliegenden Verzahnung zu verschieben, um dort eine Wirkverbindung mit der Verzahnung des Antriebselementes zu schaffen. Gleichzeitig besteht ein definierter Abstand zur zweiten Verzahnung des zahnstangenartigen Bereiches mit dem Antriebselement.

Vorteilhafterweise kann der Träger Halteelemente aufweisen, die das Antriebselement verliersicher zwischen den Verzahnungen halten, wobei insbesondere die Halteelemente als federnde Rasthaken ausgeführt sind. Die Halteelemente sind derart ausgeführt, dass das Antriebselement über ein Werkzeug vom Werker rotiert werden kann, um eine translatorische Bewegung auf die Blockiereinheit zu bewirken. Gleichzeitig sind die Halteelemente derart ausgeführt, dass eine zuverlässige Befestigung des Antriebselementes in seiner Aufnahme am Träger erzielt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im einzelnen beschrieben sind.

Es zeigen:
- Figur 1: einen Träger einer erfindungsgemäßen Handhabe eines Kraftfahrzeuges,
- Figur 2: eine vergrößerte Darstellung des Trägers mit einer Blockiereinheit, die in einer Freigabelage sich befindet,
- Figur 3: die erfindungsgemäße Vorrichtung gemäß Figur 2, wobei die Blockiereinheit in der Blockierlage sich befindet,
- Figur 4: eine Schnittansicht gemäß der Schnittlinie IV-IV aus Figur 3,
- Figur 5: eine weitere Teilansicht auf den Träger gemäß Figur 1,
- Figur 6: eine schematische Ansicht der erfindungsgemäßen Handhabe an einem Kraftfahrzeug,
- Figur 7: eine dreidimensionale Draufsicht auf ein Bauteil der Blockiereinheit, insbesondere auf das Abtriebselement,
- Figur 8: eine weitere dreidimensionale Ansicht von unten auf das Abtriebselement gemäß Figur 7,
- Figur 9: eine Darstellung eines weiteren Trägers mit einer Blockiereinheit, die in einer Blockierlage sich befindet,
- Figur 10: die Ansicht gemäß Figur 9, wobei die Blockiereinheit sich in der Freigabelage befindet,
- Figur 11: eine schematische Ansicht der Blockiereinheit gemäß Figur 9 und Figur 10,
- Figur 12: eine Ansicht eines weiteren Ausführungsbeispiels eines Trägers mit einer Blockiereinheit, die in der Blockierlage sich befindet,
- Figur 13: die Ansicht gemäß Figur 12, wobei die Blockiereinheit in der Freigabelage sich befindet und
- Figur 14: eine schematische Ansicht der Blockiereinheit gemäß Figur 12 und Figur 13.

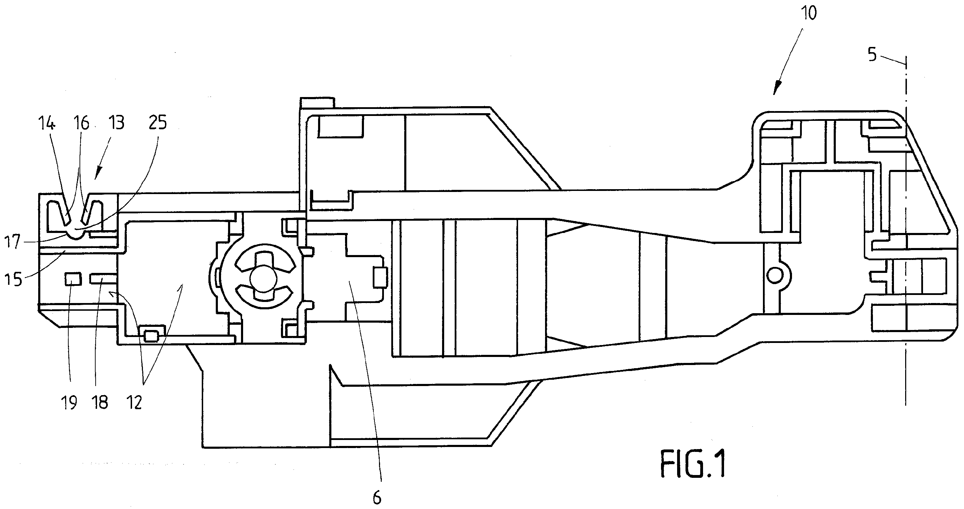

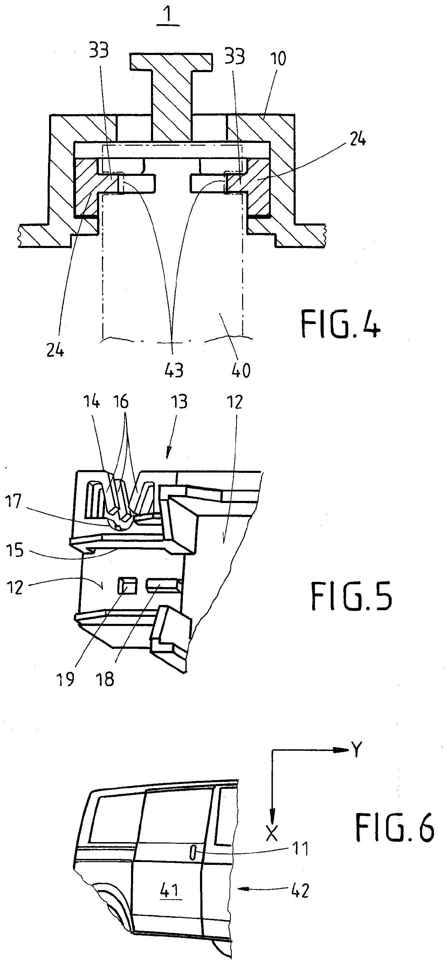

In Figur 1 ist ein Träger 10 einer Handhabe eines Kraftfahrzeuges gezeigt. Der Träger 10 wird innenseitig an einem beweglichen Teil 41 befestigt, welches in Figur 6 dargestellt ist. Hierbei kann der Träger 10 beispielsweise an einer Tür 41 angeordnet sein. Ebenfalls ist es denkbar, den Träger 10 an einer beweglichen Klappe oder Heckklappe eines Kraftfahrzeuges anzuordnen, welches explizit nicht dargestellt ist.

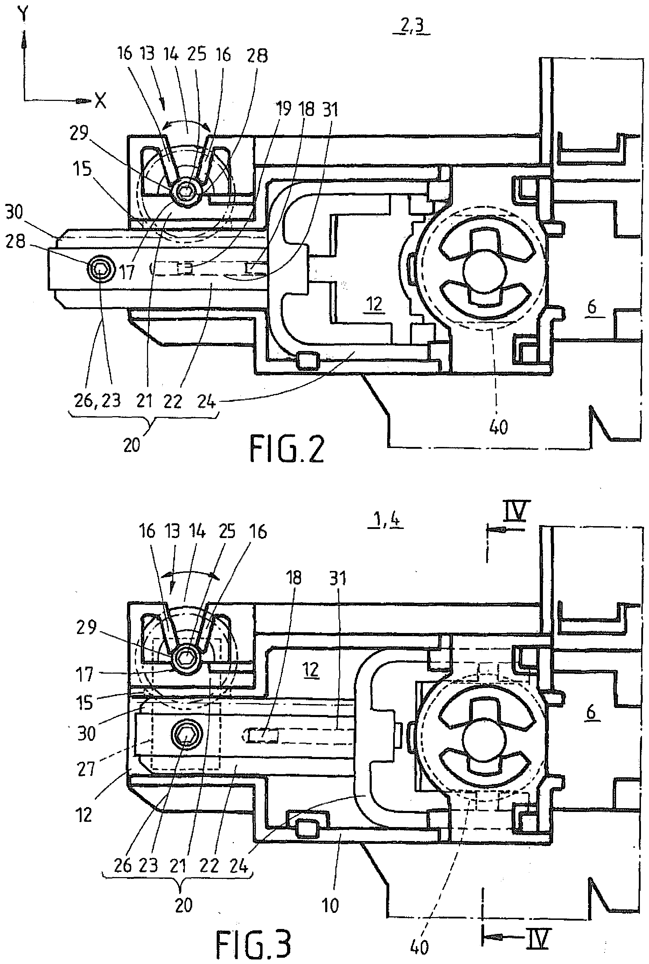

Die Handhabe ist Bestandteil eines Schließsystems eines Kraftfahrzeuges, um das bewegliche Teil 41 zu öffnen, zu schließen, zu verriegeln oder zu entriegeln. Die Handhabe weist ein außenliegendes Griffelement 11 auf, welches in Figur 6 gezeigt ist. Dieses Griffelement 11 ist durch den außenstehenden Benutzer betätigbar, um beispielsweise die Tür 41 des Kraftfahrzeuges zu öffnen. Das Griffelement 11 kann am Träger 10 bewegbar gelagert sein, wobei in Figur 1 beispielsweise das Griffelement 11 an der Achse 5 verschwenkbar gelagert ist. Der Träger 10 weist ferner eine Öffnung 6 auf, durch die ein Bestandteil des Griffelementes 11 hindurchragt. Durch eine Betätigung des Griffelementes 11 können entsprechende Aktionen seitens des Schließsystems des Kraftfahrzeuges ausgelöst werden. Die Handhabe weist ferner ein wesentliches Bauelement 40 gemäß der Figuren 2 bis 14 auf, das bei der Montage entsprechend am Träger 10 zu befestigen ist. Das Bauelement 40 ist in vorliegendem Ausführungsbeispiel ein Schließzylinder 40, der über einen Schlüssel vom Benutzer zu betätigen ist. Der Schließzylinder 40 befindet sich in einer Aufnahme des Trägers 10. Damit der Schließzylinder 40 zuverlässig während der Montage der Handhabe an der Fahrzeugtür 41 fixiert werden kann, ist eine Blockiereinheit 20 vorgesehen, die zwischen einer Blockierlage 1 und einer Freigabelage 2 gebracht werden kann. Die Blockiereinheit 20 weist zwei Getriebeelemente 21,22 auf. Hierbei ist das Getriebeelement 21 von außen zugänglich. Das Getriebeelement 21 ist ein Antriebselement 21 in Form eines Antriebsrades 21. Das weitere Getriebeelement 22 ist ein Abtriebselement 22, welches einen zahnstangenartigen Bereich 30 aufweist. Das Antriebsrad 21 ist mit dem zahnstangenartigen Bereich 30 verzahnt.

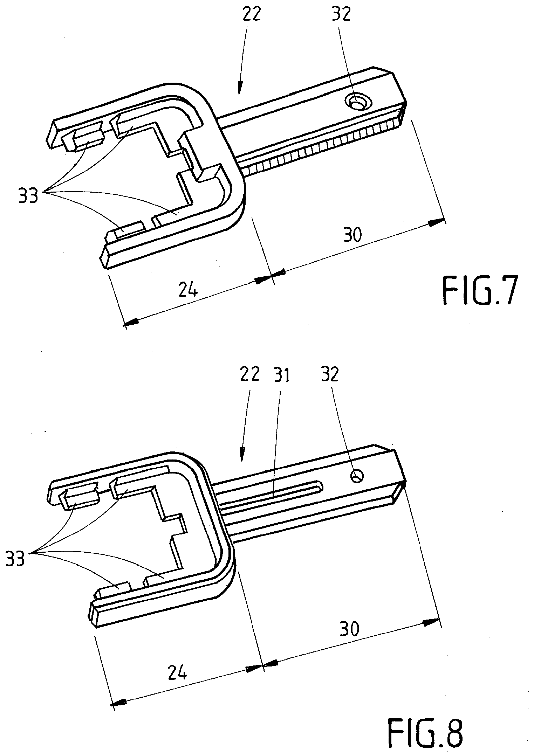

Figur 2 zeigt die Blockiereinheit 20 in ihrer Freigabelage 2, bei der der Schließzylinder 40 lose sich im Träger 30 befindet. Um nun den Schließzylinder 40 zuverlässig am Träger 10 zu befestigen, kann über ein Werkzeug das Antriebselement 21 bewegt werden, welches sich um die Drehachse 25 bewegt. Die Bewegung des Antriebsrades 21 gegen den Uhrzeigersinn bewirkt gleichzeitig, dass das Abtriebselement 22, welches im Detail in Figur 7 und Figur 8 dargestellt ist, in Richtung Schließzylinder 40 bewegt wird.

Figur 3 zeigt die Blockierlage 1, bei der sich das Abtriebselement 22 ausgehend von Figur 2 bereits in Richtung des Schließzylinders 40 bewegt hat und diesen Schließzylinder 40 entsprechend am Träger 10 zuverlässig fixiert, ohne das die Gefahr besteht, dass der Schließzylinder 40 sich vom Träger 10 löst.

Damit die Blockierlage 1 zuverlässig gehalten wird, ist eine Sicherung 23 vorgesehen. Die Sicherung 23 ist wie die Blockiereinheit 20 von außen beispielsweise durch ein Werkzeug zugänglich. Hierfür bietet die Erfindung für den Monteur ein entsprechendes Montagefenster 27, welches in Figur 3, Figur 9 und Figur 12 exemplarisch dargestellt ist. Das Montagefenster 27 sowie die einzelnen zu betätigenden Elemente der Blockiereinheit 20 sowie der Sicherung 23 können mit einer entsprechenden Signalfarbe versehen sein, welches als Montagehilfe dient.

Gemäß den dargestellten Ausführungsbeispielen weist die Blockiereinheit 20 ein einstufiges Getriebe auf, welches platzsparend innerhalb des Trägers 10 angeordnet ist. Hierbei weist der Träger 10 eine Aufnahme 13 auf, in der das Antriebselement 21 über eine Rastverbindung wirkungsvoll gehalten ist. Die Aufnahme 13 weist gemäß Figur 2, Figur 3 und Figur 5 eine erste Öffnung 14 auf, durch die das Antriebselement 21 in die Aufnahme 13 einbringbar ist. Zudem weist die Aufnahme 13 eine zweite Öffnung 15 auf, durch die das Antriebselement 21 in Richtung des Abtriebselementes 22 ragt. Die Aufnahme 13 weist zudem federnde Stege 16 auf, die von außen der Aufnahme 13 in Richtung der Drehachse 25 des Antriebselementes 21 sich erstrecken. Während das Antriebselement 21 in die Aufnahme 13 montiert wird, verformen sich elastisch die federnden Stege 16, wobei im eingesetzten Zustand des Antriebselementes 21 gemäß Figur 2 und Figur 3 die Stege 16 zurück in ihre Ursprungslage sich bewegen. Der Träger 10 weist zudem eine Lagerstelle 17 auf, die das Antriebselement 21 zuverlässig aufnimmt. Das Antriebselement 21 ist mit einer mittig angeordneten Nabe 29 ausgeführt, die zuverlässig in der der Lagerstelle 17 sowie von den freien Enden der Stege 16 gelagert ist.

Um das Antriebselement 21 zuverlässig in die Aufnahme 13 zu montieren, ist die Aufnahme 13 mit einer ersten Öffnung 14 gemäß Figur 5 ausgeführt, die im gezeigten Ausführungsbeispiel schlitzförmig ist. Auch die zweite Öffnung 15 ist schlitzförmig, durch die das Antriebselement 21 mit seiner Verzahnung aus der Aufnahme 13 ragt und in den zahnstangenartigen Bereich 30 des Abtriebselementes 22 eingreift.

Wie insbesondere die Figuren 7 bis 14 zeigen weist das Abtriebeselement 22 einen Befestigungsbereich 24 auf, der in der Freigabelage 2 (siehe Figur 2) losgelöst vom Schließzylinder 41 ist. In der Blockierlage 1, die in Figur 3, Figur 9 und Figur 12 gezeigt ist, greift der Befestigungsbereich 24 mit seiner Zahnstruktur 33 in den Schließzylinder 40 ein (siehe Figur 4 und Figur 3), wodurch eine zuverlässige Befestigung des Schließzylinders 40 am Träger 10 erreicht wird.

Die Sicherung 23 gemäß Figur 2 und Figur 3 weist ein Sicherungselement 26 am zahnstangenartigen Bereich 30 des Abtriebselementes 22 auf. Hat das Abtriebselement 22 seine Lage gemäß Figur 3 erreicht, kann über eine entsprechende Einwirkung auf das Sicherungselement 26, das zum Beispiel eine Schraube ist, eine endgültige Fixierung des Abtriebselementes 22 erfolgen. Hierbei greift das Sicherungselement 26 in eine Öffnung 19 (siehe Figur 5) des Trägers 10 ein. Eine Gefahr, dass sich dann das Abtriebselement 22 mit seinem Befestigungsbereich 24 aus dem Schließzylinder 40 löst, besteht nicht.

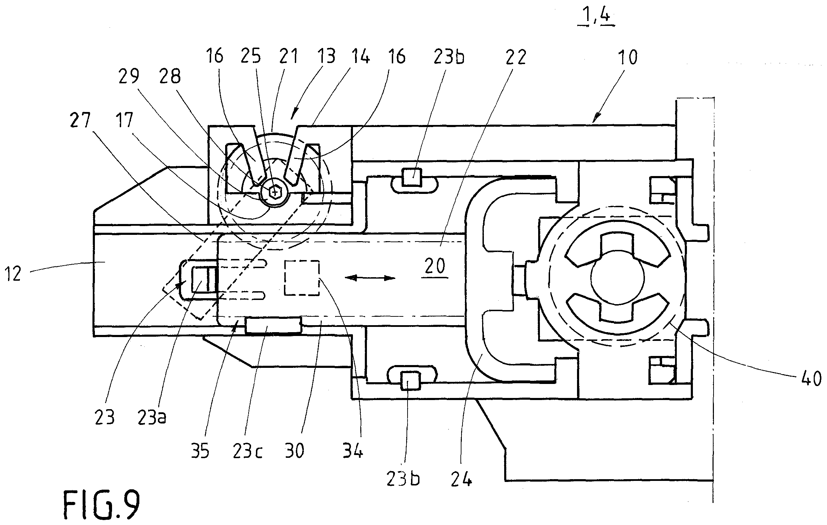

Der Träger 10 weist Führungsflächen 12 für das Abtriebselement 22 auf, die in Figur 1 bis Figur 3, in Figur 5 sowie in Figur 9 bis Figur 13 gezeigt sind.

Zudem ist die Führungsfläche 12 gemäß Figur 1 bis Figur 5 mit einem Führungselement 18 ausgeführt, welches vorsprungartig aus der Führungsfläche 12 sich erstreckt. Dieses Führungselement 18 greift in ein nutförmiges Gegenführungselement 31 am Abtriebselement 22 ein. Hierdurch wird bezweckt, dass eine zuverlässige Linearbewegung des Abtriebselementes 22 möglich ist, um die Blockiereinheit 20 zwischen der Blockierlage 1 und der Freigabelage 2 zu bringen.

Gemäß Figur 6 ist die Blockiereinheit 20 mit der Sicherung 23 von der Innenseite 42 der Tür 41 betätigbar, um eine Befestigung des Schließzylinders 40 am Kraftfahrzeug zu bewirken. Gemäß Figur 6 ist der Träger 10 gemäß Figur 2 und Figur 3 vertikal zur Bodenfläche, auf dem das Kraftfahrzeug steht, in der Tür 41 montiert. Wie in Figur 6 zu erkennen ist verläuft auch das außenliegende Griffelement 11 vertikal zur Bodenfläche.

Damit das Sicherungselement 26 zuverlässig in die Öffnung 19 der Führungsfläche 12 eingreifen kann, ist der zahnstangenartige Bereich 30 mit einer entsprechenden Öffnung 32 ausgeführt. Der Befestigungsbereich 24 ist C-förmig ausgeführt, wobei im Innenbereich eine Zahnstruktur 33 vorgesehen ist, die in der Blockierlage 1 in entsprechende Nuten 43 des Schließzylinders 40 eingreift, wodurch eine zuverlässige Fixierung und Befestigung des Schließzylinders am Träger 10 sowie an der Handhabe des Kraftfahrzeuges erzielt wird.

Bei dem Schließzylinder 40 kann es sich alternativ um eine Schließzylinderattrappe handeln, die entsprechend den oben ausgeführten Ausführungen ebenfalls zu befestigen ist.

Alternativ kann vorgesehen sein, dass zwei Aufnahmen 13 vorgesehen sind, wobei gemäß Figur 2 und Figur 3 die zweite Aufnahme unterhalb des zahnstangenartigen Bereiches 30 am Träger 10 angeordnet ist. In Abhängigkeit von der Einbausituation des Trägers 10 ist es lediglich notwendig an der oberen Aufnahme 13 oder an der unteren Aufnahme 13 das entsprechende Antriebselement 21 zu montieren.

Gemäß aller gezeigten Ausführungsbeispiele verfügen das Antriebselement 21 sowie das Sicherungselement 26 über eine Kraftaufnahmekontur 28, in die das Werkzeug von Außen wirksam eingreifen kann, um eine Bewegung des Abtriebselementes 22 zu bewirken und/oder das Sicherungselement 26 von dem deaktivierten Zustand 3 in den aktivierten Zustand 4 zu bringen, wobei der aktivierte Zustand 4 in Figur 3, Figur 9 und Figur 12 gezeigt ist.

In dem aktivierten Zustand 4 gemäß Figur 3 ist das Sicherungselement 26 fest am Abtriebselement 22 angeschraubt, so dass das Abtriebselement 22 unbeweglich in seiner Position gehalten wird und gleichzeitig den Schließzylinder 40 am Träger 10 fixiert.

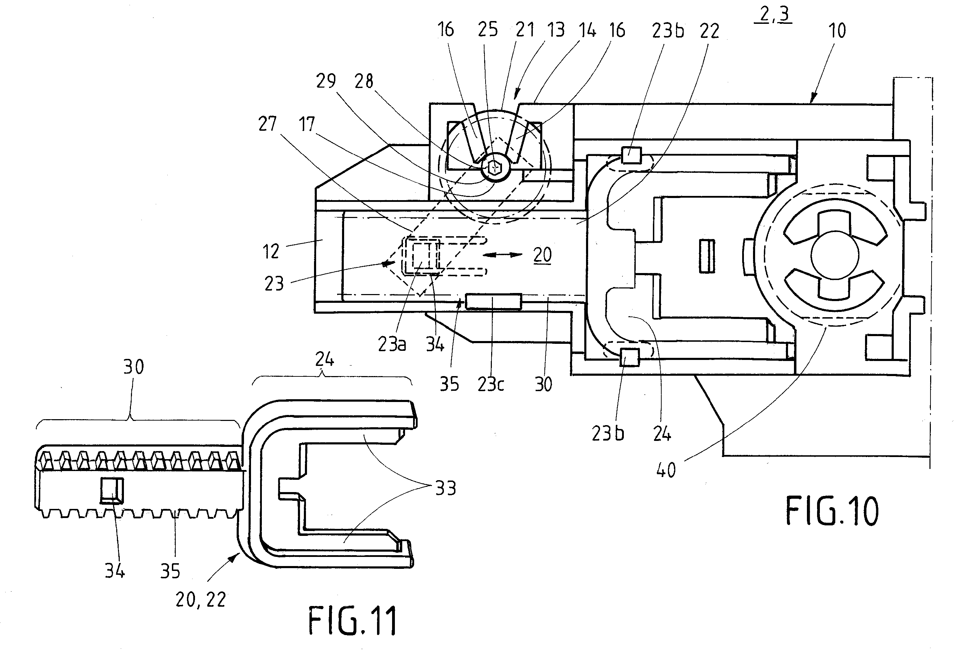

In Figur 9 bis Figur 11 ist ein weiteres Ausführungsbeispiel eines erfindungsgemäßen Trägers 10 einer Handhabe eines Kraftfahrzeuges gezeigt. In Figur 9 befindet sich die Blockiereinheit 20 in der Blockierlage 1, in der sie das Bauelement 40 zuverlässig fixiert. Das Antriebselement 21 ist wie in Figur 2 und Figur 3 in einer entsprechenden Aufnahme 13 angeordnet. Die Funktionsweise ist bereits in Figur 2 und Figur 3 entsprechend beschrieben, sodass an dieser Stelle auf die oben angeführten Ausführungen verwiesen wird. Der Träger 10 ist mit einer Sicherung 23 ausgeführt, die als Federelement gebildet ist. Der Träger 10 sowie die Sicherung 23 bilden ein monolithisches Bauteil. Zudem weist das Federelement 23 ein erstes Rastelement 23a auf, dass die Blockiereinheit 20 in der Blockierlage 1 gemäß Figur 9 zuverlässig hält. Das erste Rastelement 23a ist als Rastnase ausgeführt und greift am linken Ende des zahnstangenartigen Bereiches 30 an und verhindert, dass die Blockiereinheit 20 aus der Blockierlage 1 in Richtung Freigabelage 2, die in Figur 10 gezeigt ist, ungewollt sich bewegt.

Wie Figur 9 und Figur 10 zeigen weist der Träger 10 ein zweites 23b und ein drittes Rastelement 23c auf, wobei das zweite 23b und das dritte Rastelement 23c im Bereich der Führungsflächen 12 die Blockiereinheit 20 sowohl in der Blockierlage 1 gemäß Figur 9 als auch in der Freigabelage 2 gemäß Figur 10 zuverlässig halten. Gemäß Figur 9 wird die Blockiereinheit 20 durch das dritte Rastelement 23c in der Führungsfläche 12 zuverlässig gehalten, wobei das dritte Rastelement 23c am zahnstangenartigen Bereich 30 angreift. Die beiden gegenüberliegenden zweiten Rastelemente 23b liegen in der Blockierlage 1 der Blockiereinheit 20 beabstandet zur Blockiereinheit 20 frei. In Figur 10 greifen die beiden zweiten Rastelemente 23b sowie das dritte Rastelement 23c rastend an der Blockiereinheit 20 an. Hierbei greift das dritte Rastelement 23c direkt am zahnstangenartigen Bereich 30 an. Die beiden zweiten Rastelemente 23b hingegen greifen am Befestigungsbereich 24 der Blockiereinheit 20 an.

Gemäß Figur 9 bis Figur 11 weist die Blockiereinheit 20 eine Aufnahme 34 auf. Die Aufnahme 34 ist im vorliegenden Ausführungsbeispiel als Einbuchtung ausgebildet. Gemäß Figur 10 greift das erste Rastelement 23a in die Aufnahme 34 ein, wobei gleichzeitig das Federelement 23 sich in einer ungespannten Lage befindet. Das Montagefenster 27 ist derart ausgebildet, dass es diagonal bzw. schräg zur Bewegungsrichtung der Blockiereinheit 20 ausgerichtet ist. Wenn der Werker nun in das Antriebselement 21 gemäß Figur 10 mit einem Werkzeug in die Kraftaufnahmekontur 28 eingreift und eine Drehbewegung gegen den Uhrzeigersinn durchführt, erfolgt eine Kraftübertragung auf die nicht sichtbare Verzahnung, die auf der Rückseite, der Führungsfläche 12 zugewandt des zahnstangenartigen Bereiches 30 angeordnet ist. Über eine Rotation des Antriebselementes 21 erfolgt eine Translationsbewegung der Blockiereinheit 20 nach rechts, das bedeutet in die Blockierlage 1, die in Figur 9 erreicht ist. Während die Blockiereinheit 20 die Freigabelage 2 verlässt, drückt die Kontur der Aufnahme 34 das Rastelement 23a des Federelementes 23 in die Zeichenebene federnd hinein, bis das Federelement 23 federnd zurück springt, wenn die Blockiereinheit 20 die Blockierlage 1 gemäß Figur 9 erreicht hat. Gemäß Figur 9 hat die Sicherung 23 den aktivierten Zustand 4 erreicht.

Gemäß Figur 11 ist deutlich die Verzahnung des zahnstangenartigen Bereiches 30 gezeigt, wobei gleichzeitig die Aufnahme 34 dargestellt ist, in die das erste Rastelement 23a des Federelementes 23 gemäß Figur 10 eingreift. Der Befestigungsbereich 24 hat die gleiche Funktion wie in den zuvor beschriebenen Ausführungsbeispielen, worauf im Folgenden nur Bezug genommen wird.

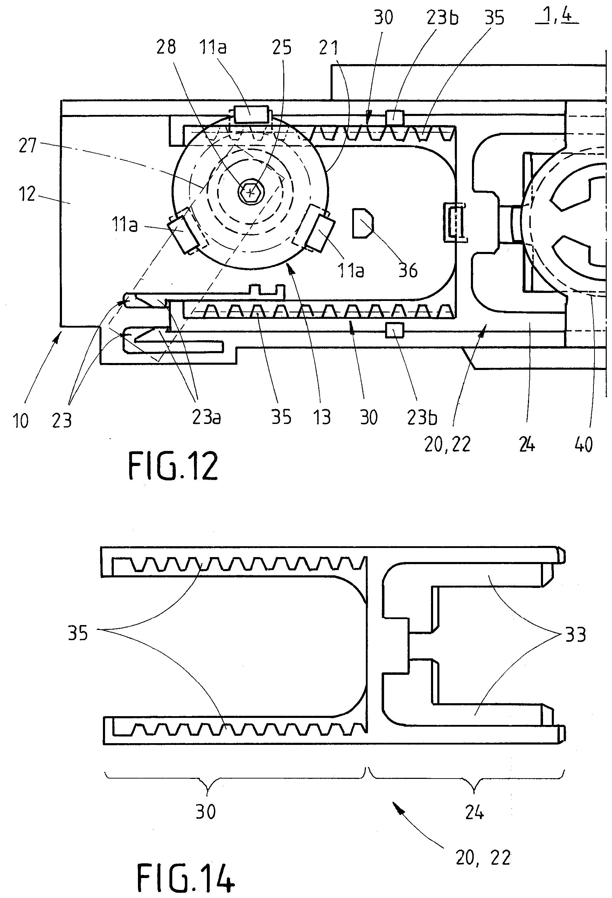

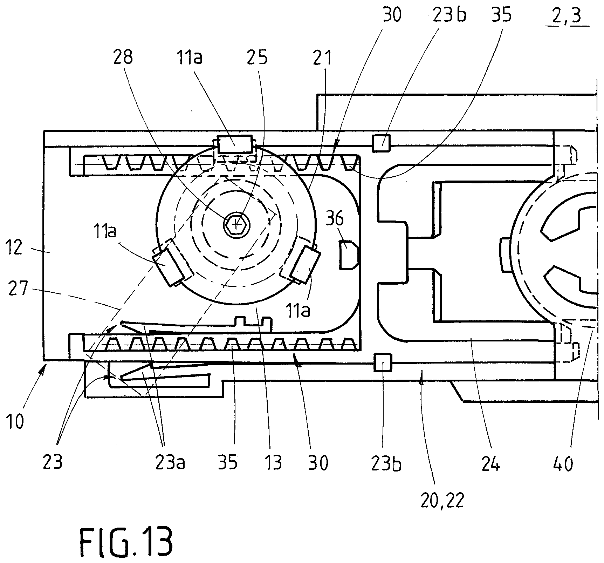

In Figur 12 bis Figur 14 ist ein weiteres Ausführungsbeispiel einer Vorrichtung zur Befestigung des Bauelementes 40 gezeigt. In Figur 12 befindet sich die Blockiereinheit 20 in der Blockierlage 1. Im Gegensatz zu den zuvor beschriebenen Ausführungsbeispielen ist die Blockiereinheit 20 im Bereich des zahnstangenartigen Bereiches 30 andersartig ausgeführt. Der zahnstangenartige Bereich 30 weist hierbei eine C-artige Ausführung auf, wobei der C-artige Bereich 30 zwei voneinander beabstandete Verzahnungen 35 aufweist und zwischen den Verzahnungen 35 am Träger 10 das Antriebselement 21 drehbar gelagert ist. Hierbei ist das Antriebselement 21 lediglich mit einer der beiden Verzahnungen 35 in Wirkverbindung. Gemäß Figur 12 und Figur 13 ist die untere Verzahnung 35 des zahnstangenartigen Bereiches 30 mit dem Antriebselement 21 im Eingriff. Ferner weist der Träger 10 Halteelemente 11a auf, die das Antriebselement 21 verliersicher zwischen den Verzahnungen 35 halten. Die Halteelemente 11a sind hierbei als federnde Rasthaken ausgeführt, wobei drei Rasthaken zur zuverlässigen Fixierung des Antriebselementes 21 vorgesehen sind, die ungefähr in einem 120° Winkel zueinander angeordnet sind.

In der Blockierlage 1 greift die Sicherung 23 am freien Ende der oberen Verzahnung 35 an, sodass ein ungewolltes Verschieben der Blockiereinheit 20 aus der Blockierlage 1 in Richtung Freigabelage 2 gemäß Figur 13 ausgeschlossen ist. Zusätzlich wird die Blockiereinheit 20 durch zweite Rastelemente 23b im Bereich des zahnstangenartigen Bereiches 30 gehalten, damit die Blockiereinheit 20 zuverlässig an den Führungsflächen 12 gehalten ist und nicht ungefähr senkrecht zur Bewegungsrichtung der Blockiereinheit 20 aus dem Träger 10 herausfallen kann. Die Sicherung 23 weist gemäß des Ausführungsbeispiel aus Figur 12 und Figur 13 zwei Federelemente 23 auf, die jeweils nach oben bzw. nach unten sich elastisch verformen können, wenn die Blockiereinheit 20 in Richtung Freigabelage 2 bewegt wird. Um aus der Freigabelage 2 gemäß Figur 13 die Blockiereinheit 20 in Richtung Blockierlage 1 gemäß Figur 12 zu bewegen, führt der Werker ein Werkzeug in die Kraftaufnahmekontur 28 des Antriebselementes 21 und kann über eine Drehbewegung im Uhrzeigersinn eine lineare Bewegung der Blockiereinheit 20 nach links, das bedeutet in Richtung Blockierlage 1 bewirken. In der Freigabelage 2 befindet sich das obere Federelement 23 innerhalb einer nicht explizit dargestellten Aufnahme, die an der oberen Verzahnung 35 ausgebildet ist und der Wirkungsweise der Aufnahme 34 gemäß Figur 11 entspricht. In der Freigabelage 2 befindet sich das Federelement 23 im ungespannten Zustand und ist nicht elastisch verformt. Erfolgt nun eine Bewegung der Blockiereinheit 20 in Richtung Blockierlage 1, wird das obere Federelement 23 nach oben elastisch verformt, wobei gleichzeitig das untere Federelement 23 nach unten elastisch verformt wird. Somit kann die Blockiereinheit 20 translatorisch in Richtung Blockierlage 1 sich verschieben.

Der Werker kann aus der Blockierlage 1 gemäß Figur 9 und Figur 12 über entsprechende Werkzeuge die Blockiereinheit 20 wieder zurück in die Freigabelage 2 bringen. Hierzu ist es notwendig, dass ein entsprechendes Werkzeug durch das schräg zur Bewegungsrichtung der Blockiereinheit 20 ausgerichtete Montagefenster 27 geführt wird, wobei gleichzeitig das erste Rastelement 23a elastisch verformt wird, damit es nicht mehr am zahnstangenartigen Bereich 30 angreift. Gleichzeitig erfolgt eine Drehbewegung des Antriebselementes 21, wodurch eine Überführung der Blockiereinheit 20 in Richtung Freigabelage 2 erzielbar ist. Gemäß Figur 14 ist die vergrößerte Darstellung der Blockiereinheit 20 gezeigt, die in Figur 12 und in Figur 13 zum Einsatz kommt. Die Funktionsweise entspricht im Wesentlichen der Beschreibung bzgl. Figur 2 und Figur 3. Die Verzahnungen 35 sind parallel zueinander ausgerichtet. Vorteilhaft ist, dass die Blockiereinheit 20 sowohl für die linke als auch für die rechte Fahrertür zum Einsatz kommen kann, wobei gleichzeitig die Drehachse des Antriebselementes 21 zur oberen Verzahnung 35 versetzt werden kann. Hierdurch kann erzielt werden, dass der Werker sowohl für die linke als auch für die rechte Fahrzeugtür nur eine Drehrichtung verwenden muss, um die Blockiereinheit 20 in die Blockierlage bzw. in die Freigabelage zu bringen. Das bedeutet, dass bei einer Tür nur die obere Verzahnung 35 mit dem Antriebselement 21 und bei der gegenüberliegenden Tür nur die untere Verzahnung 35 mit dem Antriebselement 21 in Wirkverbindung steht. Dieses erhöht die Montagefreundlichkeit.

Zudem ist gemäß Figur 12 ein Stopper 36 am Träger 10 angeordnet, der verhindert, dass bei einer Bewegung der Blockiereinheit 20 in Richtung Freigabelage 2 die Blockiereinheit 20 nicht gegen das Antriebselement 21 stößt bzw. nicht kontaktiert.

### Bezugszeichenliste

- 1: Blockierlage
- 2: Freigabelage
- 3: deaktivierter Zustand
- 4: aktivierter Zustand
- 5: Achse
- 6: Öffnung

- 10: Träger
- 11: Griffelement
- 11a: Halteelement
- 12: Führungsflächen
- 13: Aufnahme
- 14: erste Öffnung
- 15: zweite Öffnung
- 16: Steg
- 17: Lagerstelle
- 18: Führungselement
- 19: Öffnung für Sicherung 26

- 20: Blockiereinheit
- 21: Getriebeelement, Antriebselement, Antriebsrad
- 22: Getriebeelement, Abtriebselement
- 23: Sicherung, Federelement
- 23a: erstes Rastelement
- 23b: zweites Rastelement
- 23c: drittes Rastelement
- 24: Befestigungsbereich
- 25: Drehachse
- 26: Sicherungselement
- 27: Montagefenster
- 28: Kraftaufnahmekontur
- 29: Nabe

- 30: Zahnstangenartiger Bereich
- 31: Gegenführungselement
- 32: Öffnung für 26
- 33: Zahnstruktur
- 34: Aufnahme
- 35: Verzahnung
- 36: Stopper

- 40: Bauelement
- 41: bewegliches Teil, Tür
- 42: Innenseite von 41
- 43: Nut

## Patentansprüche

1. Vorrichtung zur Befestigung eines wesentlichen Bauelementes (40), insbesondere eines Schließzylinders, einer Schließzylinderattrappe etc., einer Handhabe eines Kraftfahrzeuges, mit
einem Träger (10), der innenseitig an einem beweglichen Teil (41), insbesondere an einer Klappe, Heckklappe oder Tür befestigbar ist, wobei
eine Blockiereinheit (20) am Träger (10) angeordnet ist, die bewegbare Getriebeelemente (21,22) umfasst, wodurch die Blockiereinheit (20) zwischen einer Blockierlage (1) und einer Freigabelage (2) bringbar ist, und
in der Freigabelage (2) das Bauelement (40) lose sich am Träger (10) befindet und
in der Blockierlage (1) das Bauelement (40) zuverlässig am Träger (10) gehalten ist, und wobei die Anordnung der Getriebeelemente (21,22) ein einstufiges Getriebe mit einem Antriebselement (21) und einem Abtriebselement (22) ist, **dadurch gekennzeichnet, dass** das Antriebselement (21) ein Antriebsrad (21) ist oder das Abtriebselement (22) zumindest bereichsweise zahnstangenartig ausgeführt ist.

2. Vorrichtung nach Anspruch 1,
**dadurch gekennzeichnet,**
**dass** zumindest ein Getriebeelement (21,22) von außen zugänglich ist, um eine Befestigung des Bauelementes (40) zu bewirken, wobei insbesondere von der Innenseite (42) des beweglichen Teils (41) der Zugang zu mindestens einem Getriebeelement (21,22) vorgesehen ist.

3. Vorrichtung nach Anspruch 1 oder 2,
**dadurch gekennzeichnet,**
**dass** ein außenliegendes Griffelement (11) am Träger (10) anordenbar ist und/oder ein außenliegendes Griffelement (11) am Träger (10) bewegbar lagerbar ist, wobei das Griffelement (11) sowie der Träger (10) eine längliche Erstreckung aufweisen, die horizontal oder vertikal am beweglichen Teil (41) verläuft, wobei insbesondere das bewegliche Teil (41) eine schwenkbare Tür oder Heckklappe oder eine Schiebetür ist.

4. Vorrichtung nach einem der vorhergehenden Ansprüche,
**dadurch gekennzeichnet,**
**dass** die Blockiereinheit (20) eine Sicherung (23) aufweist, die in einem aktivierten Zustand (4) die Beibehaltung der Blockierlage (1) sichert, wobei insbesondere die Sicherung (23) von außen zugänglich ist und/oder von der Innenseite (42) des beweglichen Teils (41) der Zugang zur Sicherung (23) vorgesehen ist.

5. Vorrichtung nach einem der vorhergehenden Ansprüche,
**dadurch gekennzeichnet,**
**dass** die Blockiereinheit (20) einen bewegbaren Befestigungsbereich (24) aufweist, der in der Freigabelage (2) losgelöst vom Bauelement (40) ist und in der Blockierlage (1) zuverlässig in das Bauelement (40) eingreift, wobei insbesondere das Abtriebselement (22) mit dem Befestigungsbereich (24) ausgeführt ist.

6. Vorrichtung nach Anspruch 5,
**dadurch gekennzeichnet,**
**dass** der Befestigungsbereich (24) C-förmig ausgeführt ist, wobei in der Blockierlage (1) der Befestigungsbereich (24) zumindest bereichsweise das Bauelement (40) umfasst und/oder dass der Träger (10) mit definierten Führungsflächen (12) ausgeführt ist, die eine Bewegung des Befestigungsbereiches (24) und/oder des Abtriebselementes (22) ermöglichen.

7. Vorrichtung nach Anspruch 1 oder 5,
**dadurch gekennzeichnet,**
**dass** der Träger (10) mit einer Aufnahme (13) für das Antriebselement (21) ausgeführt ist, wobei das Antriebselement (21) über eine Rastverbindung an der Aufnahme (13) gehalten ist und/oder das Antriebselement (21) federnd in der Aufnahme (13) gelagert ist, wobei insbesondere die Aufnahme (13) eine erste Öffnung (14) aufweist, durch die das Antriebselement (21) in die Aufnahme (13) einbringbar ist, und/oder eine zweite Öffnung (15) aufweist, durch die das Abtriebselement (22) in Richtung des Abtriebselementes (22) ragt und/oder insbesondere dass die Aufnahme (13) federnde Stege (16) aufweist, die von außen der Aufnahme (13) in Richtung einer Drehachse (25) des Antriebselementes (21) sich erstrecken.

8. Vorrichtung nach Anspruch 7,
**dadurch gekennzeichnet,**
**dass** die erste (14) und/oder die zweite Öffnung (15) schlitzförmig sind.

9. Vorrichtung nach den Ansprüchen 4-8,
**dadurch gekennzeichnet,**
**dass** am zahnstangenartigen Bereich (30) des Abtriebselementes (22), der in Wirkverbindung mit dem Antriebselement (21) ist, die Sicherung (23) vorgesehen ist, wobei insbesondere in der Blockierlage (1) durch den zahnstangenartigen Bereich (30) des Abtriebselementes (22) ein Sicherungselement (26) sich erstreckt und gleichzeitig in die Führungsfläche (12) eindringt.

10. Vorrichtung nach den Ansprüchen 6-9,
**dadurch gekennzeichnet,**
**dass** die Führungsfläche (12) ein Führungselement (18) aufweist, das in ein Gegenführungselement (31) des Abtriebselementes (22) eingreift und/oder dass das Antriebselement (21) und das Abtriebselement (22) miteinander verzahnt sind, wobei insbesondere die Verzahnung selbsthemmend ausgeführt ist.

11. Vorrichtung nach Anspruch 4 oder 9,
**dadurch gekennzeichnet,**
**dass** ein Montagefenster (27) vorgesehen ist, das lediglich einen Eingriff mit einem Werkzeug am Antriebselement (21) sowie an der Sicherung (23) erlaubt, wobei insbesondere das Montagefenster (27) senkrecht und/oder diagonal zur Bewegungsrichtung der Blockiereinheit (20) zwischen der Blockierlage (1) und der Freigabelage (2) ausgerichtet ist.

12. Vorrichtung nach einem der Ansprüche 4, 9 oder 11,
**dadurch gekennzeichnet,**
**dass** die Sicherung (23) und/oder das Antriebselement (21) eine Kraftaufnahmekontur (28) aufweist, damit ein Werkzeug auf die Sicherung (23) und/oder auf das Antriebselement (21) wirken kann.

13. Vorrichtung nach einem der Ansprüche 4, 9, 11 oder 12,
**dadurch gekennzeichnet,**
**dass** die Sicherung (23) als ein Federelement (23) ausgeführt ist, das ein monolithisches Bauteil mit dem Träger (10) ist und/oder das materialeinheitlich mit dem Träger (10) verbunden ist, wobei das Federelement (23) mit einem ersten Rastelement (23a) ausgebildet ist, das die Blockiereinheit (20) in der Blockierlage (1) zuverlässig hält, wobei insbesondere das erste Rastelement (23a) den zahnstangenartigen Bereich (30) des Abtriebselement (22) in der Blockierlage (1) der Blockiereinheit (20) hält.

14. Vorrichtung nach Anspruch 13,
**dadurch gekennzeichnet,**
**dass** der Träger (10) ein zweites (23b) und/oder ein drittes Rastelement (23c) aufweist, wobei das zweite (23b) und/oder das dritte Rastelement (23c) im Bereich der Führungsflächen (12) die Blockiereinheit (20) in der Blockierlage (1) und/oder in der Freigabelage (2) zuverlässig halten.

15. Vorrichtung nach Anspruch 13,
**dadurch gekennzeichnet,**
**dass** die Blockiereinheit (20) eine Aufnahme (34) aufweist, in die das erste Rastelement (23a) in der Freigabelage (2) der Blockiereinheit (20) eingreift, wobei insbesondere das Federelement (23) sich im ungespannten Zustand befindet.

16. Vorrichtung nach einem der Ansprüche 13 bis 15,
**dadurch gekennzeichnet,**
**dass** das erste Rastelement (23a) die Blockiereinheit (20) gegen eine Verschiebung in Richtung Freigabelage (2) sichert und/oder das zweite (23b) und/oder das dritte Rastelement (23c) die Blockiereinheit (20) gegen ein ungewolltes Herausfallen ungefähr senkrecht zur Bewegungsrichtung zwischen der Blockierlage (1) und der Freigabelage (2) sichert.

17. Vorrichtung nach einem der Ansprüche 9 oder 13,
**dadurch gekennzeichnet,**
**dass** der zahnstangenartige Bereich (30) stabartig oder C-artig ausgeführt ist, wobei der C-artige Bereich (30) zwei voneinander beabstandete Verzahnungen (35) aufweist und zwischen den Verzahnungen (35) am Träger (10) das Antriebselement (21) drehbar gelagert ist, wobei insbesondere das Antriebselement (21) lediglich mit einer der beiden Verzahnungen (35) in Wirkverbindung steht.

## Claims

1. Device for attaching an essential component (40), specifically a lock cylinder, a lock cylinder dummy etc. of a handle of a motor vehicle, with a carrier (10) which can be attached on the inside on a movable part (41), specifically a lid, a tailgate, or a door, wherein a blocking unit (20) is arranged on the carrier (10) that comprises movable gear elements (21, 22) with which the blocking unit (20) can be moved between a blocking position (1) and a release position (2), with the component (40) being located loosely on the carrier (10) in the release position (2), and the component (40) being held reliably on the carrier (10) in the blocking position (1), and wherein the arrangement of the gear elements (21, 22) is a single-stage gear with a drive element (21) and an output element (22), **characterized in that** the drive element (21) being engineered as a drive wheel (21) and/or the output element (22) being engineered gear-rack-like at least in part.

2. Device according to Claim 1, **characterized in that** at least one gear element (21, 22) is accessible from the outside in order to effect an attachment of the component (40), specifically with access to at least one gear element (21, 22) provided from the inside (42) of the movable part (41).

3. Device according to Claim 1 or 2, **characterized in that** an outside grip element (11) may be arranged on the carrier (10) and/or that an outside grip element (11) is supported movably on the carrier (10), with the grip element (11) and the carrier (10) extending in elongated configuration that extends horizontally or vertically on the movable part (41), with the movable part (41) consisting specifically of a hinged door or tailgate or a sliding door.

4. Device according to any one of the preceding Claims, **characterized in that** the blocking unit (20) comprises a safety device (23) that secures the retention of the blocking position (1) in activated condition (4), specifically with the safety device (23) being accessible from outside, and/or with the access to the safety device (23) provided from the inside (42) of the movable part (41).

5. Device according to any one of the preceding Claims, **characterized in that** the blocking unit (20) comprises a movable attachment area (24) that is detached from the component (40) in the release position (2) and reliably engages the component (40) in the blocking position (1), with specifically the output element (22) being engineered with the attachment area (24).

6. Device according to Claim 5, **characterized in that** the attachment area (24) is C-shaped, with the attachment area (24) embracing at least in sections the component (40) in the blocking position (1) and/or that the carrier (10) is engineered with defined guide surfaces (12) that make a movement of the attachment area (24) and/or the output element (22) possible.

7. Device according to any one of claims 1 or 5, **characterized in that** the carrier (10) is engineered with a receptacle (13) for the drive element (21), with the drive element (21) held on the receptacle (13) by means of a latching connection and/or the drive element (21) being supported with spring action in the receptacle (13) and/or that the receptacle (13) comprises a first opening (14) through which the drive element (21) can be placed in the receptacle (13) and/or a second opening (15) through which the output element (21) protrudes in the direction of the output element (22) and/or in particular that that the receptacle (13) comprises bars (16) with spring action that extend from outside the receptacle (13) in the direction of an axis of rotation (25) of the drive element (21).

8. Device according to claim 7, **characterized in that** the first (14) and/or the second opening (15) are slot-shaped.

9. Device according to any one of claims 4 to 8, **characterized in that** on the gear-rack-like section (30) of the output element (22) that is operatively connected with the drive element (21), the safety device (23) is provided, with, specifically in the blocking position (1), a safety element (26) extending through the gear-rack-like section (30) of the output element (22) and simultaneously intruding into the guide surface (12).

10. Device according to any one of claims 6 to 9, **characterized in that** the guide surface (12) comprises a guide element (18) that engages a counter-guide element (31) of the output element (22), and/or that the drive element (21) and the output element (22) mesh, specifically with the gearing being of a self-locking type.

11. Device according to any one of claims 4 or 9, **characterized in that** an assembly window (27) is provided that only allows manipulation by means of a tool on the drive element (21) as well as on the safety device (23), wherein in particular the assembly window (27) is aligned perpendicularly and/or diagonally to the movement direction of the blocking unit (20) between the blocking position (1) and the release position (2).

12. Device according to any one of claims 4, 9,or 11, **characterized in that** the safety device (23) and/or the drive element (21) comprise a force-receiving contour (28) so that a tool can act on the safety device (23) and/or on the drive element (21).

13. Device according to any one of claims 4, 9, 11 or 12, **characterized in that** the safety device (23) is engineered as a spring element (23) that forms a monolithic component with the carrier (10) and/or is connected with the carrier (10) in a materially uniform way, with the spring element (23) being formed with a first latching element (23a) that reliably holds the blocking unit (20) in the blocking position (1), with specifically the first latching element (23a) holding the gear-rack-like section (30) of the output element (22) in the blocking position (1) of the blocking unit (20).

14. Device according to claim 13, **characterized in that** the carrier (10) comprises a second (23b) and/or a third latching element (23c), with the second (23b) and/or the third latching element (23c) reliably holding, in the area of the guide surfaces (12), the blocking unit (20) in the blocking position (1) and/or in the release position (2).

15. Device according to claim 13, **characterized in that** the blocking unit (20) comprises a receptacle (34) that is engaged by the first latching element (23a) in the release position (2) of the blocking unit (20), specifically with the spring element (23) not under tension.

16. Device according to any one of claims 13 to 15, **characterized in that** the first latching element (23a) secures the blocking unit (20) against a shift in the direction of the release position (2), and/or that the second (23b) and/or the third latching element (23c) secure the blocking unit (20) from unintentionally falling out perpendicularly to the movement direction between the blocking position (1) and the release position (2).

17. Device according to any one of claims 9 or 13, **characterized in that** the gear-rack-like section (30) may be bar-shaped or C-shaped, with the C-shaped section (30) comprising two gears (35) arranged at a distance from each other, and with the drive element (21) supported rotatably between the gears (35) on the carrier (10), wherein in particular the drive element (21) is operatively connected with only one of the two gears (35).

## Revendications

1. Dispositif de fixation d'un élément constitutif essentiel (40), en particulier d'un cylindre de serrure, d'un faux cylindre de serrure, etc., d'une poignée d'un véhicule à moteur,
avec un support (10), qui peut être fixé sur le côté intérieur sur une pièce mobile (41), en particulier sur un capot, un hayon ou une porte,
sachant qu'une unité de blocage (20) est disposée sur le support (10) et comprend des éléments de transmission mobiles (21, 22), de sorte que l'unité de blocage (20) peut être déplacée entre une position de blocage (1) et une position de libération (2), et
l'élément constitutif (40) se trouvant détaché sur le support (10) dans la position de libération (2) et l'élément constitutif (40) étant maintenu de manière fiable sur le support (10) dans la position de blocage (1),
et sachant que l'agencement d'éléments de transmission (21, 22) est un mécanisme de transmission à un étage avec un élément menant (21) et un élément mené (22), **caractérisé en ce que** l'élément menant (21) est un pignon menant (21) ou l'élément mené (22) est réalisé au moins sectoriellement à la manière d'une crémaillère.

2. Dispositif selon la revendication 1, **caractérisé en ce qu'**au moins un élément de transmission (21, 22) est accessible de l'extérieur afin de produire une fixation de l'élément constitutif (40), sachant en particulier que l'accès à au moins un élément de transmission (21, 22) est prévu depuis le côté intérieur (42) de la pièce mobile (41).

3. Dispositif selon la revendication 1 ou 2, **caractérisé en ce qu'**un élément de préhension extérieur (11) peut être disposé sur le support (10) et/ou un élément de préhension extérieur (11) peut être monté à déplacement sur le support (10), sachant que l'élément de préhension (11) ainsi que le support (10) présentent une configuration allongée qui s'étend horizontalement ou verticalement sur la pièce mobile (41), sachant en particulier que la pièce mobile (41) est une porte pivotante ou un hayon ou une porte coulissante.

4. Dispositif selon l'une des revendications précédentes, **caractérisé en ce que** l'unité de blocage (20) présente une sécurité (23) qui, dans un état activé (4), assure la conservation de la position de blocage (1), sachant en particulier que la sécurité (23) est accessible de l'extérieur et/ou que l'accès à la sécurité (23) est prévu depuis le côté intérieur (42) de la pièce mobile (41).

5. Dispositif selon l'une des revendications précédentes, **caractérisé en ce que** l'unité de blocage (20) présente une région de fixation mobile (24) qui est détachée de l'élément constitutif (40) dans la position de libération (2) et qui s'engage de manière fiable dans l'élément constitutif (40) dans la position de blocage (1), sachant en particulier que l'élément mené (22) est réalisé avec la région de fixation (24).

6. Dispositif selon la revendication 5, **caractérisé en ce que** la région de fixation (24) est réalisée en forme de C, sachant que, dans la position de blocage (1), la région de fixation (24) englobe au moins sectoriellement l'élément constitutif (40), et/ou **en ce que** le support (10) est réalisé avec des surfaces de guidage définies (12) qui permettent un déplacement de la région de fixation (24) et/ou de l'élément mené (22).

7. Dispositif selon la revendication 1 ou 5, **caractérisé en ce que** le support (10) est réalisé avec un logement (13) pour l'élément menant (21), sachant que l'élément menant (21) est maintenu au moyen d'une liaison par enclenchement sur le logement (13) et/ou que l'élément menant (21) est monté avec effet de ressort dans le logement (13), sachant en particulier que le logement (13) présente une première ouverture (14) par laquelle l'élément menant (21) peut être introduit dans le logement (13), et/ou une deuxième ouverture (15) par laquelle l'élément menant (21) dépasse en direction de l'élément mené (22), et/ou en particulier que le logement (13) présente des nervures élastiques (16) qui s'étendent de l'extérieur du logement (13) en direction d'un axe de rotation (25) de l'élément menant (21).

8. Dispositif selon la revendication 7, **caractérisé en ce que** la première (14) et/ou la deuxième ouverture (15) sont en forme de fentes.

9. Dispositif selon les revendications 4 à 8, **caractérisé en ce que** la sécurité (23) est prévue sur la région du genre crémaillère (30) de l'élément mené (22) qui est en liaison fonctionnelle avec l'élément menant (21), sachant en particulier que. dans la position de blocage (1), un élément de sécurité (26) passe par la région du genre crémaillère (30) de l'élément mené (22) et pénètre en même temps dans la surface de guidage (12).

10. Dispositif selon les revendications 6 à 9, **caractérisé en ce que** la surface de guidage (12) présente un élément de guidage (18) qui s'engage dans un élément de guidage complémentaire (31) de l'élément mené (22), et/ou **en ce que** l'élément menant (21) et l'élément mené (22) sont en engrènement mutuel, sachant en particulier que l'engrènement est réalisé autobloquant.

11. Dispositif selon la revendication 4 ou 9, **caractérisé en ce qu'**il est prévu une fenêtre de montage (27) qui permet uniquement un engagement avec un outil sur l'élément menant (21) ainsi que sur la sécurité (23), sachant en particulier que la fenêtre de montage (27) est orientée perpendiculairement et/ou diagonalement à la direction de déplacement de l'unité de blocage (20) entre la position de blocage (1) et la position de libération (2).

12. Dispositif selon l'une des revendications 4, 9 ou 11, **caractérisé en ce que** la sécurité (23) et/ou l'élément menant (21) présente un contour d'absorption de force (28), afin qu'un outil puisse agir sur la sécurité (23) et/ou sur l'élément menant (21).

13. Dispositif selon l'une des revendications 4, 9, 11 ou 12, **caractérisé en ce que** la sécurité (23) est réalisée sous la forme d'un élément (23) à effet de ressort qui constitue un élément monolithique avec le support (10) et/ou qui est assemblé par liaison de matière au support (10), sachant que l'élément (23) à effet de ressort est réalisé avec un premier élément d'enclenchement (23a) qui maintient de manière fiable l'unité de blocage (20) dans la position de blocage (1), sachant en particulier que le premier élément d'enclenchement (23a) maintient la région du genre crémaillère (30) de l'élément mené (22) dans la position de blocage (1) de l'unité de blocage (20).

14. Dispositif selon la revendication 13, **caractérisé en ce que** le support (10) présente un deuxième (23b) et/ou un troisième élément d'enclenchement (23c), sachant que le deuxième (23b) et/ou le troisième élément d'enclenchement (23c) maintiennent de manière fiable l'unité de blocage (20) dans la position de blocage (1) et/ou dans la position de libération (2) dans la région des surfaces de guidage (12).

15. Dispositif selon la revendication 13, **caractérisé en ce que** l'unité de blocage (20) présente un logement (34) dans lequel s'engage le premier élément d'enclenchement (23a) dans la position de libération (2) de l'unité de blocage (20), sachant en particulier que l'élément (23) à effet de ressort se trouve à l'état non tendu.

16. Dispositif selon l'une des revendications 13 à 15, **caractérisé en ce que** le premier élément d'enclenchement (23a) empêche l'unité de blocage (20) de se décaler en direction de la position de libération (2), et/ou le deuxième (23b) et/ou le troisième élément d'enclenchement (23c) empêche l'unité de blocage (20) de tomber involontairement environ perpendiculairement à la direction de déplacement entre la position de blocage (1) et la position de libération (2).

17. Dispositif selon l'une des revendications 9 ou 13, **caractérisé en ce que** la région du genre crémaillère (30) est réalisée en forme de barre ou en C, sachant que la région en C (30) présente deux dentures (35) distantes l'une de l'autre et que l'élément menant (21) est monté à rotation entre les dentures (35) sur le support (10), sachant en particulier que l'élément menant (21) se trouve en liaison fonctionnelle avec une seule des deux dentures (35).
